(19)

Europäisches
Patentamt
European
Patent Office
Office européen
des brevets

(11) **EP 2 295 388 A1**

(12) **EUROPEAN PATENT APPLICATION**
published in accordance with Art. 153(4) EPC

(43) Date of publication:
**16.03.2011 Bulletin 2011/11**

(21) Application number: **09766667.1**

(22) Date of filing: **17.06.2009**

(51) Int Cl.:
*C04B 35/46* (2006.01)    *C01G 23/00* (2006.01)

(86) International application number:
**PCT/JP2009/061006**

(87) International publication number:
**WO 2009/154219 (23.12.2009 Gazette 2009/52)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **18.06.2008  JP 2008159810
13.11.2008  JP 2008291353
09.12.2008  JP 2008313760**

(71) Applicant: **Sumitomo Chemical Company, Limited
Tokyo 104-8260 (JP)**

(72) Inventors:
• **MAKI, Hajime
  Tsukuba-shi
  Ibaraki 305-0051 (JP)**
• **YAMANISHI, Osamu
  Niihama-shi
  Ehime 792-0025 (JP)**

(74) Representative: **Vossius & Partner
Siebertstrasse 4
81675 München (DE)**

(54) **METHOD FOR PRODUCING ALUMINUM TITANATE-BASED CERAMIC**

(57)    The invention is to provide a process for producing an aluminum titanate-based ceramic such as aluminum titanate or aluminum magnesium titanate having excellent thermal decomposition resistance and having a smaller coefficient of thermal expansion. The invention is a process for producing an aluminum titanate-based ceramic, comprising firing a starting material mixture containing a titanium source compound, an aluminum source compound and preferably a magnesium source compound, and a glass frit having a deformation point of 700°C or more and/or a viscosity at 900°C of $1.0 \times 10^6$ poises or more.

EP 2 295 388 A1

**Description**

TECHNICAL FIELD

The present invention relates to a process for producing aluminum titanate-based ceramics (aluminum titanate-containing ceramics, aluminum magnesium titanate-containing ceramics, etc.).

BACKGROUND ART

Aluminum titanate-based ceramics are ceramics containing titanium and aluminum as the constitutive elements and showing a crystal pattern of aluminum titanate in X-ray diffraction spectrum, and are known as ceramics excellent in thermal decomposition resistance, and are conventionally used for firing tools such as crucibles. Recently, the value of industrial applicability of the ceramics is increasing as a material of constituting a ceramic filter for collecting fine carbon particles contained in exhaust gas discharged from internal combustion engines such as diesel engines.

As a process for producing such aluminum titanate-based ceramics, known is a process of firing a starting material mixture containing a powder of a titanium source compound such as titania and a powder of an aluminum source compound such as alumina; and WO2005/105704 (Patent Reference 1) discloses aluminum titanate-based ceramics having more enhanced thermal decomposition resistance is obtained by firing the starting material mixture further added with a powder of a magnesium source compound and a powder of alkali feldspar.

PRIOR ART REFERENCE

PATENT REFERENCE

Patent Reference 1: WO2005/105704 (Patent Reference 1)

DISCLOSURE OF THE INVENTION

PROBLEMS THAT THE INVENTION IS TO SOLVE

The present inventors have diligently studied for the purpose of developing a process for producing an aluminum titanate-based ceramic having excellent thermal decomposition resistance and having a smaller coefficient of thermal expansion, and as a result, have reached the present invention.

MEANS FOR SOLVING THE PROBLEMS

Specifically, the invention provides a process for producing an aluminum titanate-based ceramic, comprising firing a starting material mixture containing a titanium source compound, an aluminum source compound, and a glass frit having a deformation point of 700°C or more and/or a viscosity at 900°C of $1.0 \times 10^6$ poises or more.

In the production process of the invention, the titania-equivalent amount of the titanium source compound to be used, is preferably from 30 parts by mass to 70 parts by mass, and the amount of the glass frit to be used is preferably from 0.1 parts by mass to 20 parts by mass relative to 100 parts by mass of the total of the titania-equivalent amount of the titanium source compound to be used, and the alumina-equivalent amount of the aluminum source compound to be used.

In the production process of the invention, preferably, the starting material mixture further contains a magnesium source compound. The magnesia-equivalent amount of the magnesium source compound to be used, is preferably from 0.1 parts by mass to 10 parts by mass relative to 100 parts by mass of the total of the titania-equivalent amount of the titanium source compound to be used, and the alumina-equivalent amount of the aluminum source compound to be used.

The titanium source compound is preferably titanium oxide; and the aluminum source compound is preferably aluminum oxide and/or magnesia spinel. The glass frit is preferably silicate glass containing $SiO_2$ in an amount of 50 % by mass or more, and the magnesium source compound is preferably magnesium oxide and/or magnesia spinel.

In the production process of the invention, preferably, the starting material mixture is mixed in dry condition or in wet condition; and also preferably, the mixture is ground and mixed in the co-presence of grinding media in a grinding container.

The grinding media are preferably alumina balls or zirconia balls having a diameter of from 1 mm to 100 mm. Also preferably, the grinding container is vibrated by the amplitude of from 2 mm to 20 mm.

Further, the invention includes a process for producing an aluminum titanate-based ceramic powder, comprising preparing an aluminum titanate-based ceramic according to any of the above-mentioned production processes, and grinding the resulting aluminum titanate-based ceramic.

EFFECT OF THE INVENTION

In the production process of the invention, a glass frit is used as the silicon source, and therefore an aluminum titanate-based ceramic having a smaller coefficient of thermal expansion than in conventional production processes, and further, since the glass frit used therein has a deformation point of 700°C or more and/or a viscosity at 900°C of 1.0 $\times$ $10^6$ poises or more, an aluminum titanate-based ceramic having excellent thermal decomposition resistance can be produced.

MODE FOR CARRYING OUT THE INVENTION

In the production process of the invention, used is a starting material mixture containing a titanium source compound, an aluminum source compound, and a glass frit having a deformation point of 700°C or more and/or a viscosity at 900°C of 1.0 $\times$ $10^6$ poises or more.
The titanium source compound includes, for example, a powder of titanium oxide. Titanium oxide includes, for example, titanium(IV) oxide, titanium(III) oxide, and titanium(II) oxide. Preferred is titanium(IV) oxide. Titanium(IV) oxide may be crystalline or amorphous. When titanium(IV) oxide is crystalline, the crystal type thereof includes an anatase type, a rutile type, and a brookite type, and preferred are an anatase type and a rutile type.
As the other titanium source compound, also usable is a compound capable of being led to titania (titanium oxide) by firing in air. The compound includes, for example, titanium salt, titanium alkoxide, titanium hydroxide, titanium nitride, titanium sulfide, and titanium metal.
The titanium salt particularly includes titanium trichloride, titanium tetrachloride, titanium(IV) sulfide, titanium (VI) sulfide, and titanium(IV) sulfate. The titanium alkoxide particularly includes titanium(IV) ethoxide, titanium(IV) methoxide, titanium(IV) tert-butoxide, titanium(IV) isobutoxide, titanium(IV) n-propoxide, titanium(IV) tetraisopropoxide, and their chelate compounds.
In the invention, only one type of the titanium source compound may be used, or two or more types thereof may be used in combination with each other.
The titanium source compound may contain inevitable impurities derived from raw materials or those mixed in production steps.
The aluminum source compound includes, for example, a powder of alumina (aluminum oxide). The crystal type of alumina includes a $\gamma$ type, a $\delta$ type, a $\theta$ type, and an $\alpha$ type, and alumina may be amorphous. As the aluminum source compound, preferred is an $\alpha$-type alumina.
As the other aluminum source compound, also usable is a compound capable of being led to alumina by firing in air. The compound includes, for example, aluminum salt, aluminum alkoxide, aluminum hydroxide, and aluminum metal.
The aluminum salt may be a salt with an inorganic acid (inorganic salt), or a salt with an organic acid (organic salt). The aluminum inorganic salt particularly includes, for example, nitrates such as aluminum nitrate, ammonium aluminum nitrate; and carbonates such as ammonium aluminum carbonate. The aluminum organic salt includes, for example, aluminum oxalate, aluminum acetate, aluminum stearate, aluminum lactate, and aluminum laurate.
The aluminum alkoxide particularly includes, for example, aluminum isopropoxide, aluminum ethoxide, aluminum sec-butoxide, and aluminum tert-butoxide.
Aluminum hydroxide may be crystalline or amorphous. When aluminum hydroxide is crystalline, the crystal type thereof includes, for example, a gibbsite type, a bayerite type, a norstrandite type, a boehmite type, and a pseudo-boehmite type. Amorphous aluminum hydroxide includes, for example, an aluminum hydrolyzate to be obtained by hydrolysis of an aqueous solution of a water-soluble aluminum compound such as aluminum salt, aluminum alkoxide.
As the aluminum source compound, also usable is a compound containing an aluminum source and a magnesium source. The compound includes, for example, a powder of magnesia spinel [$MgAl_2O_4$].
In the invention, only one type of the aluminum source compound may be used, or two or more types thereof may be used in combination with each other.
The aluminum source compound may contain inevitable impurities derived from raw materials or those mixed in production steps.
Preferably, the starting material mixture for use in the process of the invention for producing an aluminum titanate-based ceramic further contains a magnesium source compound in addition to the above-mentioned titanium source compound and aluminum source compound. The magnesium source compound includes, for example, magnesia (magnesium oxide).
As the other magnesium source compound, also usable is a compound capable of being led to magnesia by firing in air. The compound includes, for example, magnesium salt, magnesium alkoxide, magnesium hydroxide, magnesium nitride, and magnesium metal.

The magnesium salt may be a salt with an inorganic acid (inorganic salt), or a salt with an organic acid (organic salt). The magnesium inorganic salt particularly includes magnesium chloride, magnesium perchlorate, magnesium phosphate, magnesium pyrophosphate, magnesium nitrate, magnesium carbonate, and magnesium sulfate. The magnesium organic salt includes magnesium oxalate, magnesium acetate, magnesium citrate, magnesium lactate, magnesium stearate, magnesium salicylate, magnesium myristate, magnesium gluconate, magnesium dimethacrylate, and magnesium benzoate.

The magnesium alkoxide particularly includes magnesium methoxide, magnesium ethoxide.

As the magnesium source compound, usable is a compound containing a magnesium source and an aluminum source. The compound includes, for example, a powder of magnesia spinel $[MgAl_2O_4]$.

In the invention, only one type of the magnesium source compound may be used or two or more types thereof may be used in combination with each other.

The magnesium source compound may contain inevitable impurities derived from raw materials or those mixed in production steps.

Of the titanium source compound, the aluminum source compound and the magnesium source compound, like a composite oxide such as the above-mentioned magnesia spinel $[MgAl_2O_4]$,
a compound comprising two or more metal elements may be considered as an equivalent of a starting material mixture obtained by mixing the respective metal source compounds in the invention. The starting material mixture may contain aluminum titanate or aluminum magnesium titanate itself. For example, aluminum magnesium titanate as a starting material mixture corresponds to the starting material mixture containing a titanium source, an aluminum source and a magnesium source.

The amount of the titanium source compound and the aluminum source compound to be used may be determined by the calculated result in terms of titania $[TiO_2]$ and alumina $[Al_2O_3]$. The titania-equivalent amount of the titanium source compound to be used may be generally from 30 parts by mass to 70 parts by mass, and the alumina-equivalent amount of the aluminum source compound to be used may be generally from 70 parts by mass to 30 parts by mass, relative to 100 parts by mass of the total of the titania-equivalent amount of the titanium source compound to be used, and the alumina-equivalent amount of the aluminum source compound to be used; preferably, the titania-equivalent amount of the titanium source compound to be used is from 40 parts by mass to 60 parts by mass, and the alumina-equivalent amount of the aluminum source compound to be used is from 60 parts by mass to 40 parts by mass.

On the other hand, when the starting material mixture further contains a magnesium source compound, the magnesia$[MgO]$-equivalent amount of the magnesium source compound to be used, may be generally from 0.1 parts by mass to 10 parts by mass, preferably 8 parts by mass or less, relative to 100 parts by mass of the total of the titania $[TiO_2]$-equivalent amount of the titanium source compound to be used, and the alumina$[Al_2O_3]$-equivalent amount of the aluminum source compound to be used.

In the starting material mixture in the production process of the invention, a glass frit is used as the silicon source compound. Glass frit is flaky or powdery ground glass. When firing an aluminum titanate-based ceramic, the silicon source serves also as a reaction aid, and when a glass frit is used as the silicon source, then the melting point of the silicon source may be lower. In other words, as compared with a case of using a crystalline silicon source, the silicon source in the invention can form a liquid phase at a lower temperature, therefore an aluminum titanate-based ceramic can be easily synthesized. As a result, the fired aluminum titanate-based ceramic may have a smaller coefficient of thermal expansion.

The above-mentioned glass frit has a deformation point of 700°C or more and/or a viscosity at 900°C of $1.0 \times 10^6$ poises or more. A deformation point of glass is also called as a yield point. A deformation point of glass is a temperature at which the thermal expansion of glass increasing with temperature elevation changes to rapidly decrease. When a glass frit having a deformation point of lower than 700°C and having a viscosity at 900°C of lower than $1.0 \times 10^6$ poises is used, then the thermal decomposition resistance of the fired aluminum titanate-based ceramic may be insufficient.

When a glass frit having a deformation point of lower than 700°C is used, then the glass phase in the fired aluminum titanate-based ceramic may readily soften, and therefore, the thermal decomposition resistance of the fired aluminum titanate-based ceramic may be lower. The reason why a viscosity of the glass frit at 900°C is defined is to consider the temperature range within which conventional aluminum titanate-based ceramics are thermally decomposed, and the viscosity within the temperature range gives an influence on the melting state of the glass phase existing in the grain boundary of aluminum titanate-based ceramics. In other words, when the viscosity of the glass frit at 900°C is lower than $1.0 \times 10^6$ poises and when the glass phase existing in the aluminum titanate-based ceramic is melted, then the diffusion of the constitutive elements of the aluminum titanate-based ceramic into the molten glass phase is promoted, and therefore, the thermal decomposition resistance of the fired aluminum titanate-based ceramic is insufficient.

As the glass constituting the above-mentioned glass frit, usable is ordinary silicate glass comprising silicic acid $[SiO_2]$ as the main ingredient (accounting for 50 % by mass or_more of all the ingredients). As the other constitutive ingredients, the glass may contain alumina [$Al_2O_3$], sodium oxide [$Na_2O$], potassium oxide [$K_2O$], calcium oxide [CaO] and magnesia [MgO], like ordinary silicate glass.

Further, the glass frit preferably contains zirconia [$ZrO_2$] for enhancing the hot water resistance of the glass itself, and the content thereof is preferably from 0.1 wt.% or more to 10 wt.% or less.

On the other hand, preferably, the glass frit for use in the production process of the invention does not contain boric acid [$B_2O_3$]. This is because, boric acid is a factor to lower the deformation point of glass, and it may be difficult to make the glass have a deformation point of 700°C or more.

The amount of the glass frit to be used is preferably from 0.1 parts by mass or more to 20 parts or less by mass, more preferably 10 parts by mass or less, relative to 100 parts by mass of the total of the titania-equivalent amount of the titanium source compound to be used, and the alumina-equivalent amount of the aluminum source compound to be used. The particle size of the glass frit for use in the invention is preferably small in order that the glass frit can uniformly disperse in the above-mentioned mixture, and in general, the median particle size thereof is 15 μm or less, preferably 10 μm or less.

In the production process of the invention, when the metal source compounds of the titanium source compound, the aluminum source compound and the magnesium source compound are powdery, those metal source compounds may be mixed with the glass frit to give the starting material mixture for use in the production process of the invention. When non-powdery metal source compounds such as massive ones are used or when the compounds are desired to be mixed more uniformly, the mixture of the metal source compounds and the glass frit may be ground and mixed. The mixing mode may be in dry condition or in wet condition.

In dry mixing, for example, the starting material mixture may be mixed and stirred in a grinding container, not being dispersed in a liquid medium, and in general, the mixture is stirred in the co-presence of a grinding media in a grinding container.

As the grinding container, generally used is container made of a metal material such as stainless steel and the like; and its inner surface may be coated with a fluororesin, a silicone resin, an urethane resin and the like. The inner capacity of the grinding container may be generally from 1 time by volume to 4 times by volume, preferably from 1.2 times by volume to 3 times by volume as much as the total volume of the starting material mixture and the grinding media.

As the grinding media, for example, usable are alumina balls, zirconia balls and the like having a diameter of from 1 mm to 100 mm, preferably from 5 mm to 50 mm. The amount of the grinding media to be used may be generally from 1 time by mass to 1000 times by mass, preferably from 5 times by mass to 100 times by mass as much as the total amount of the starting material mixture.

The grinding may be attained, for example, by putting the starting material mixture and the grinding media into a grinding container and then vibrating and/or rotating the grinding container. By vibrating or rotating the grinding container, the starting material mixture may be stirred and mixed with the grinding media therein, and thus ground. For vibrating or rotating the grinding container, for example, usable are ordinary grinding machines such as a vibration mill, a ball mill or a planetary mill. From the viewpoint of industrial operation, preferred is a vibration mill. When the grinding container is vibrated, its vibration amplitude may be generally from 2 mm to 20 mm, preferably 12 mm or less. The grinding may be attained by continuous process or by batch process; but from the viewpoint of industrial operation, continuous process is preferred. The time to be taken for grinding may be generally from 1 minute to 6 hours, preferably from 1.5 minutes to 2 hours.

In grinding the starting material mixture in dry condition, additives such as a grinding aid, a deflocculant may be added thereto. The grinding aid includes, for example, alcohols such as methanol, ethanol, and propanol; glycols such as propylene glycol, polypropylene glycol, and ethylene glycol; amines such as triethanolamine; higher fatty acids such as palmitic acid, stearic acid, and oleic acid; carbon materials such as carbon black, graphite. One or more of these may be used either singly or in combination with each other.

When the additives are used, the total amount thereof to be used may be generally from 0.1 parts by mass to 10 parts by mass, preferably from 0.5 parts by mass to 5 parts by mass, more preferably from 0.75 parts by mass to 2 parts by mass, relative to 100 parts by mass of the amount of the starting material mixture.

On the other hand, in wet mixing, for example, the starting material mixture may be mixed and dispersed in a liquid medium. The mixing machine is not specifically defined, and the mixture may be stirred in the co-presence of a liquid solvent in an ordinary container, or may be ground and stirred in the co-presence of a liquid medium and grinding media in a grinding container.

As the grinding container and the grinding media, generally used are the same container and the same grinding media as in the case of dry mixing. The inner capacity of the grinding container may be generally from 1 time by volume to 4 times by volume, preferably from 1.2 times by volume to 3 times by volume as much as the total volume of the starting material mixture, the grinding media and the liquid medium. The amount of the grinding media to be used may be generally from 1 time by mass to 1000 times by mass, preferably from 5 times by mass to 100 times by mass as much as the total amount of the starting material mixture.

In wet mixing, water is generally used as a solvent. As containing few impurities, preferred is ion-exchanged water. As the solvent, however, any others than water may also be used. For example, organic solvents are usable, including alcohols such as methanol, ethanol, butanol, and propanol; glycols such as propylene glycol, polypropylene glycol, and ethylene glycol. The amount of the solvent to be used may be generally from 20 parts by mass to 1000 parts by mass, preferably from 30 parts by mass to 300 parts by mass, relative to 100 parts by mass of the amount of above-mentioned mixture.

In wet mixing, a dispersant may be added to the solvent. The dispersant includes, for example, inorganic acids such as nitric acid, hydrochloric acid, and sulfuric acid; organic acids such as oxalic acid, citric acid, acetic acid, malic acid, and lactic acid; alcohols such as methanol, ethanol, and propanol; surfactants such as ammonium polycarboxylate. When the dispersant is used, its amount to be used may be generally from 0.1 parts by mass to 20 parts by mass, preferably from 0.2 parts by mass to 10 parts by mass, relative to 100 parts by mass of the solvent.

In grinding, for example, the starting material mixture, the liquid medium and the grinding media, and optionally the dispersant may be put into a grinding container, and the starting material mixture may be mixed and ground therein in the same manner as in the case of dry mixing.

After the mixing, the solvent is removed (for example, through evaporation) to give the uniformly mixed mixture.

In removing the solvent, the temperature and pressure conditions are not defined. The mixture may be dried in air at room temperature, may be dried in vacuum, or may be dried under heat. The stirring condition is not also defined; and any of static drying or fluidized drying may be attained. In drying under heat, the temperature is not specifically defined, but may be generally from 50°C or more to 250°C or less. The device to be used for drying under heat includes, for example, a shelf drier, a slurry drier, and a spray drier.

In wet mixing, some starting material mixtures such as aluminum source compounds may dissolve in a solvent depending on the type of the starting material; however, the starting material mixture such as the aluminum source compound dissolved in the solvent may again precipitate to be a solid through solvent evaporation.

In that manner, a starting material mixture is prepared by mixing a titanium source compound, an aluminum source compound and a glass frit and preferably a magnesium source, and the starting material mixture is fired to give a fired body of aluminum titanate-based ceramic. The titanium source compound, the aluminum source compound and the glass frit and others are generally contained in the starting material mixture in powder form therein.

The powdery starting material mixture itself may be fired, or after the starting material mixture is shaped, the resulting shaped body may be fired. Firing the shaped body may promote the formation of aluminum titanate. The shaping machine to be used for shaping includes an extruder, a uniaxial press, a tabletter, and a granulator.

Using an extruder, the starting material mixture may be shaped after a pore-forming agent, a binder, a lubricant, a plasticizer, a dispersant, a solvent and the like are added thereto.

The pore-forming agent includes, for example, carbon materials such as graphite; resins such as polyethylene, polypropylene, and polymethyl methacrylate; vegetable materials such as starch, nutshell, walnut shell, and corn; ice or dry ice.

The binder includes, for example, celluloses such as methyl cellulose, carboxymethyl cellulose, and sodium carboxymethyl cellulose; alcohols such as polyvinyl alcohol; salts such as lignin sulfonate salt; waxes such as paraffin wax, microcrystalline wax; thermoplastic resins such as EVA, polyethylene, polystyrene, liquid-crystalline polymer, and engineering plastics. Some substances may serve both as a pore-forming agent and a binder. Such substances may be capable of acting to adhere the particles to each other in shaping to thereby keep the shaped body, and capable of being fired away in the subsequent firing step to form pores. The substances particularly include polyethylene.

The lubricant includes, for example, alcoholic lubricants such as glycerin; higher fatty acids such as caprylic acid, lauric acid, palmitic acid, alaginic acid, oleic acid, and stearic acid; metal stearates such as aluminum stearate. The lubricant generally functions also as a plasticizer.

As the solvent, generally used is ion-exchanged water, as well as alcohols such as methanol, ethanol.

When the starting material mixture or the shaped body thereof is fired to thereby give a fired body of aluminum titanate-based ceramic such as aluminum titanate or aluminum magnesium titanate, the firing temperature may be generally 1300°C or more, preferably 1400°C or more. On the other hand, in order that the fired body of aluminum titanate-based ceramic is made to be readily processed, or in order that the fired body is made to be readily ground in the case where the fired body is thereafter ground into powder form, the firing temperature is generally 1650°C or less, preferably 1600°C or less. Not specifically defined, the heating rate up to the firing temperature may be generally from 1°C/hr to 500°C/hr.

The firing may be attained generally in air; however, depending on the constitutive ingredients of the starting material mixture and the blend ratio thereof, the firing may be attained in an inert gas such as nitrogen gas, argon gas, or may be attained in a reducing gas such as carbon monoxide gas, hydrogen gas. The water vapor partial pressure in the atmosphere may be reduced in firing.

In general, the firing is attained using an ordinary firing furnace such as a tubular electric furnace, a boxy electric furnace, a tunnel furnace, a far-IR furnace, a microwave heating furnace, a shaft furnace, a reverberating furnace, a rotary furnace, and a roller hearth furnace. The firing may be attained by batch process or by continuous process, and may be attained in a static mode or a fluidized mode.

The time to be taken for the firing may be a time enough for transition of the above-mentioned mixture into an aluminum titanate-based ceramic (aluminum titanate, aluminum magnesium titanate, etc.), and may be generally from 10 minutes to 24 hours, depending on the amount of the mixture, the type of the firing furnace, the firing temperature, the firing atmosphere and others.

In that manner, the intended aluminum titanate-based ceramic can be obtained as a fired body. The fired body may be formed to the final product by grinding process.

By grinding the massive fired body, the ceramic powder may be obtained. The grinding may be attained, for example, using a hand grinder, a mortar, or an ordinary grinding machine such as a ball mill, a vibration mill, a planetary mill, a media-assisted stirring mill, a pin mill, a jet mill, a hammer mill, and a roll mill. The ceramic powder obtained by grinding may be classified according to an ordinary method. The ceramic powder thus obtained may comprise nearly spherical particles, and therefore does not wear away containers in handling the powder.

Further, the ceramic powder may be formed into a granular form or shaped body according to a known powder-shaping technique.

The aluminum titanate-based ceramic obtained according to the production process of the invention includes a crystal pattern of aluminum titanate or aluminum magnesium titanate in X-ray diffraction spectrum, and in addition, the ceramic may further contain any other crystal pattern of silica, alumina, and titania. When the aluminum titanate-based ceramic is aluminum magnesium titanate ($Al_{2(1-x)}Mg_xTi_{(1+x)}O_5$), the value x may be controlled by the amount of the titanium source compound, the aluminum source compound and the magnesium source compound. The value x is 0.01 or more, preferably from 0.01 or more to 0.7 or less, more preferably from 0.02 or more to 0.5 or less.

EXAMPLES

The invention is described in detail with reference to the following Examples; however, the invention should not be limited to the embodiments of the following Examples.

The aluminum titanate conversion ratio (hereinafter referred to as "AT conversion ratio") of the aluminum titanate-based ceramic obtained in Example and Comparative Examples was calculated according to the following formula (2). In formula (2), $I_T$ indicates the integrated intensity of the peak appearing at the position of $2\theta = 27.4°$ [corresponding to the titania-rutile phase (110) face] in a powdery X-ray diffraction spectrum, and $I_{AT}$ indicates the integrated intensity of the peak appearing at the position of $2\theta = 33.7°$ [corresponding to the aluminum titanate phase (230) face and the aluminum magnesium titanate phase (230) face].

$$\text{AT Conversion Ratio (\%)} = 100 \times I_{AT}/(I_{AT} + I_T) \quad \cdots \quad (2)$$

The thermal decomposition ratio of the aluminum titanate-based ceramic obtained in Example and Comparative Examples was determined as follows: The aluminum titanate-based ceramic powder was put into an alumina crucible, and kept at 1100°C for 48 hours in a boxy electric furnace thereby aluminum magnesium titanate for thermal decomposition evaluation was obtained. In the powdery X-ray diffraction spectrum [XRD] of the thus-obtained aluminum magnesium titanate for thermal decomposition evaluation, the integrated intensity ($I_{T2}$) of the peak appearing at the position of $2\theta = 27.4°$ [corresponding to the titania-rutile phase (110) face], and the integrated intensity [$I_{AT2}$] of the peak appearing at the position of $2\theta = 33.7°$ [corresponding to the aluminum titanate phase (230) face and the aluminum magnesium titanate phase (230) face] were determined, and the thermal decomposition ratio was calculated according to the following formula (1):

$$\text{Thermal Decomposition Ratio (\%)}$$

$$= 100 - 100 \times I_{AT2}/(I_{AT2} + I_{T2}) \quad \cdots \quad (1)$$

The particle form of the aluminum titanate-based ceramic obtained in Example and Comparative Examples was observed with a scanning electromicroscope [SEM].

The density of the shaped fired body of aluminum titanate-based ceramic obtained in Example and Comparative Examples was measured and evaluated according to the following method. First, the metal source compounds described in Example and Comparative Examples were mixed or ground and mixed, and 3 g of the resulting starting material mixture was shaped with a uniaxial press under a pressure of 0.3 t/cm$^2$ to give a shaped body having a diameter of 20 mm. Next, the shaped body was heated at a heating rate of 300°C/h, and fired at 1450°C for 4 hours in a boxy electric furnace, thereby a fired body of aluminum titanate-based ceramic was obtained. The density of the fired body was measured according to an Archimedean method. The density of the shaped fired body of aluminum titanate-based ceramic obtained in Example and Comparative Examples was thus measured.

The coefficient of thermal expansion of the shaped fired body of aluminum titanate-based ceramic obtained in Example and Comparative Examples was determined according to the following operation. A sample was cut out of the shaped fired body used in determination of the density of the shaped fired body in Example and Comparative Examples, and heated up to 600°C at 200°C/h. Next, using a thermal mechanical analyzer [TMA (SII Technology's TMA6300)], the sample was heated up to 1000°C at 600°C/h, and the coefficient of thermal expansion [$K^{-1}$] of the sample during the period was determined.

The viscosity of the glass frit used in Example and Comparative Examples was measured as follows: The glass frit was shaped with a uniaxial press and then fired, and the fired product was analyzed with a wide-range viscometer (WRVM-313, manufactured by Opto Corporation) according to a parallel plate method, thereby the viscosity of the glass at 900°C was determined.

[Example 1]

Into an alumina-made grinding container (inner capacity, 3.3 L), 20.0 g of titania powder [DuPont's "R-900"], 27.4 g of α-alumina powder [Sumitomo Chemical's "AES-12"], 0.8 g of magnesia powder [Ube Material's "UC-95M"] and 1.8 g of glass frit [Takara Standard's Code "CK0832M2", having a median particle size of 7.4 μm, a deformation point of 768°C (measured by the maker), and a viscosity of $1.1 \times 10^9$ poises] were added along with 5 kg of alumina beads [diameter 15 mm]. The value x of aluminum magnesium titanate in the aluminum titanate-based ceramic is about 0.09.

The total volume of the mixture of the titania powder, the α-alumina powder, the magnesia powder and the glass frit was about 50 $cm^3$. Next, the grinding container was vibrated using a vibration mill for 2 minutes, under the condition of a vibration amplitude of 5.4 mm, a vibration frequency of 1760 times/min and a power of 5.4 kW corresponding to a gravitational acceleration of 10 G, whereby the mixture in the grinding container was ground to give a starting material mixture. Into an alumina-made crucible, 5 g of the starting material mixture was added, then heated up to 1450°C at a heating rate of 300°C/hr in air in a boxy electric furnace, and kept at that temperature for 4 hours whereby the mixture was fired. Next, this was left cooled to room temperature to give an aluminum titanate-based ceramic. The aluminum titanate-based ceramic thus obtained was ground in a mortar to give an aluminum titanate-based ceramic powder. The powder was analyzed through powder X-ray diffraction spectrometry to give the X-ray diffraction spectrum of the powder, which showed a crystal peak of aluminum magnesium titanate with a minor crystal peak of α-alumina. No crystal peak of a titania-rutile phase was observed. The AT conversion ratio of the powder was calculated, and was 100 %. The thermal decomposition ratio of the obtained aluminum titanate-based ceramic was calculated, and was 7.4 %. The form of the powder was observed with SEM, and almost all the particles constituting the powder were spherical. The density of the fired body was measured, and was 3.40 g/$cm^3$, and the coefficient of thermal expansion thereof was $2.2 \times 10^{-6}$ $K^{-1}$.

[Comparative Example 1]

An aluminum titanate-based ceramic powder was produced in the same manner as in Example 1, except that, feldspar [Ohira feldspar obtained from Tokushu Seiko, Code "SS-300"] was used in place of glass frit in the starting material used in Example 1. The AT conversion ratio of the aluminum titanate-based ceramic was calculated, and was 100 %. The thermal decomposition ratio of the obtained aluminum titanate-based ceramic was calculated, and was 3.7 %. The form of the aluminum titanate-based ceramic powder was observed with SEM, and almost all the particles constituting the powder were spherical. The density of the fired body was measured, and was 3.21 g/$cm^3$, and the coefficient of thermal expansion thereof was $2.6 \times 10^{-6}$ $K^{-1}$.

[Comparative Example 2]

An aluminum titanate-based ceramic powder was produced in the same manner as in Example 1, except for glass frit in the starting material[glass frit, Code "CK0314M2" obtained from Takara Standard, having a median particle size of 7 μm or so, a deformation point of 610°C (measured by the maker), and a viscosity of $4.9 \times 10^4$ poises]. The AT conversion ratio of the aluminum titanate-based ceramic was calculated, and was 100 %. The thermal decomposition ratio of the obtained aluminum titanate-based ceramic was calculated, and was 100 %. The form of the aluminum titanate-based ceramic powder was observed with SEM, and almost all the particles constituting the powder were spherical. The density of the fired body was measured, and was 3.36 g/$cm^3$.

The ingredients and their blend ratio in the glass frits used in Example 1 and Comparative Example 2 were checked with fluorescent X-ray analyzer [Rigaku's ZSX Primus II]. The data were shown in Table 1.

[Table 1]

Table 1 - Ingredients and Their Ratio in Glass Frits Used

| | Glass Frit | Ingredients and Their Ratio (wt.%) | | | | | Total | Deformation |
|---|---|---|---|---|---|---|---|---|
| | Code | $SiO_2$ | $Al_2O_3$ | $K_2O$ | $Na_2O$ | CaO | (wt.%) | Point (°C) |
| Example 1 | CK0832M2 | 71.9 | 10.1 | 8.02 | 3.15 | 3.66 | 96.83 | 768 |
| Comparative Example 2 | CK0314M2 | 63.2 | 6.7 | 3.61 | 13.8 | 11.8 | 99.11 | 610 |
| Note) Code CK0314M2 contains, as another ingredient, $B_2O_3$ in an amount of about 30 wt.% of the total amount thereof. | | | | | | | | |

## INDUSTRIAL APPLICABILITY

The aluminum titanate-based ceramic such as aluminum titanate or aluminum magnesium titanate obtained according to the production process of the invention is usable in various industrial applications. For example, there are mentioned tools for firing furnaces such as crucibles, setters, saggers, and refractories; filters and catalyst carriers for use for exhaust gas purification in internal combustion engines such as diesel engines, gasoline engines; ceramic filters, for example, filters for filtration for foods such as beer, filters for selective permeation of gaseous components to be generated during petroleum purification, such as carbon monoxide, carbon dioxide, nitrogen, and oxygen; electronic parts such as substrates, capacitors.

## Claims

1. A process for producing an aluminum titanate-based ceramic, comprising firing a starting material mixture containing a titanium source compound, an aluminum source compound, and a glass frit having a deformation point of 700°C or more and/or a viscosity at 900°C of $1.0 \times 10^6$ poises or more.

2. The production process according to claim 1, wherein the titania-equivalent amount of the titanium source compound to be used, is from 30 parts by mass to 70 parts by mass relative to 100 parts by mass of the total of the titania-equivalent amount of the titanium source compound to be used, and the alumina-equivalent amount of the aluminum source compound to be used.

3. The production process according to claim 1 or 2, wherein the amount of the glass frit to be used is from 0.1 parts by mass to 20 parts by mass relative to 100 parts by mass of the total of the titania-equivalent amount of the titanium source compound to be used, and the alumina-equivalent amount of the aluminum source compound to be used.

4. The process for producing an aluminum titanate-based ceramic according to any one of claims 1 to 3, wherein the starting material mixture further contains a magnesium source compound.

5. The production process according to claim 4, wherein the magnesia-equivalent amount of the magnesium source compound to be used, is from 0.1 parts by mass to 10 parts by mass relative to 100 parts by mass of the total of the titania-equivalent amount of the titanium source compound to be used, and the alumina-equivalent amount of the aluminum source compound to be used.

6. The production process according to claim 4 or 5, wherein the magnesium source compound is magnesium oxide and/or magnesia spinel.

7. The production process according to any one of claims 1 to 6, wherein the titanium source compound is titanium oxide.

8. The production process according to any one of claims 1 to 7, wherein the aluminum source compound is aluminum oxide and/or magnesia spinel.

9. The production process according to any one of claims 1 to 8, wherein the glass frit is silicate glass containing $SiO_2$ in an amount of 50 % by mass or more.

10. The production process according to any one of claims 1 to 9, wherein the starting material mixture is mixed in dry condition or in wet condition.

11. The production process according to claim 10, wherein the mixture is ground and mixed in dry condition or in wet condition in the co-presence of grinding media in a grinding container.

12. The production process according to claim 11, wherein the grinding media are alumina balls or zirconia balls having a diameter of from 1 mm to 100 mm.

13. The production process according to claim 11 or 12, wherein the grinding container is vibrated by the amplitude of from 2 mm to 20 mm.

14. A process for producing an aluminum titanate-based ceramic powder, comprising preparing an aluminum titanate-based ceramic according to the production process of any one of claims 1 to 13, and grinding the resulting aluminum titanate-based ceramic.

## INTERNATIONAL SEARCH REPORT

| International application No. |
|---|
| PCT/JP2009/061006 |

A.   CLASSIFICATION OF SUBJECT MATTER
C04B35/46(2006.01)i, C01G23/00(2006.01)i

According to International Patent Classification (IPC) or to both national classification and IPC

B.   FIELDS SEARCHED

Minimum documentation searched (classification system followed by classification symbols)
C04B35/46, C01G23/00

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2008-514542 A  (Corning Inc.),<br>08 May, 2008 (08.05.08),<br>Claims; Par. Nos. [0007], [0022], [0025], [0039]<br>& US 2006/0064957 A1    & EP 1805112 A<br>& WO 2006/039255 A2    & CN 101027256 A | 1–14 |
| Y | JP 7-53281 A  (Harima Ceramic Co., Ltd.),<br>28 February, 1995 (28.02.95),<br>Par. No. [0014]<br>(Family: none) | 1–14 |
| Y | JP 2004-123496 A  (Nippon Sheet Glass Co., Ltd.),<br>22 April, 2004 (22.04.04),<br>Claims; Par. Nos. [0008], [0032]; table 1,<br>example 2<br>(Family: none) | 1–14 |

| ☒ Further documents are listed in the continuation of Box C. | ☐ See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>01 September, 2009 (01.09.09) | Date of mailing of the international search report<br>08 September, 2009 (08.09.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/061006 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-60983 A  (Nichias Corp.),<br>29 February, 2000 (29.02.00),<br>Claims; Par. No. [0015]<br>(Family: none) | 1-14 |
| Y | WO 2005/105704 A1  (Ohcera Co., Ltd.),<br>10 November, 2005 (10.11.05),<br>Par. No. [0002]<br>& US 2007/0224110 A1    & EP 1741684 A1<br>& CA 2563600 A          & KR 10-2007-0012365 A<br>& CN 1946653 A | 4-6 |
| Y | JP 2001-114567 A  (TDK Corp.),<br>24 April, 2001 (24.04.01),<br>Par. Nos. [0003], [0020]<br>(Family: none) | 11,12 |
| Y | JP 3-218924 A  (Tosoh Corp.),<br>26 September, 1991 (26.09.91),<br>Page 4, lower right column, lines 1 to 4<br>& US 5071800 A          & EP 386932 A1<br>& DE 69026973 C         & AT 138049 T<br>& KR 10-1995-0010806 B | 13 |
| Y | JP 6-87651 A  (Toshiba Corp.),<br>29 March, 1994 (29.03.94),<br>Par. No. [0003]<br>(Family: none) | 14 |
| A | JP 6-305828 A  (Kawasaki Rozai Kabushiki<br>Kaisha),<br>01 November, 1994 (01.11.94),<br>Claims<br>(Family: none) | 1-14 |
| A | JP 2003-115218 A  (NGK Spark Plug Co., Ltd.),<br>18 April, 2003 (18.04.03),<br>Par. No. [0034]; table 2<br>& US 2003/0216240 A1    & EP 1364920 A1<br>& TW 243805 B            & CN 1459427 A | 1-14 |

Form PCT/ISA/210 (continuation of second sheet) (April 2007)

**EP 2 295 388 A1**

## REFERENCES CITED IN THE DESCRIPTION

**Patent documents cited in the description**

- WO 2005105704 A